# DEMANDE DE BREVET EUROPEEN

(11) **EP 0 648 550 A1**
(43) Date de publication de la demande: **19.04.1995**
(21) Numéro de dépôt: 93402486.0
(22) Date de dépôt: 08.10.1993
(51) Int. Cl.: B09B 3/00, A62D 3/00

(54) **Procédé de traitement des sols pollués et dispositif pour sa mise en oeuvre**

(71) Demandeur: COMPAGNIE DU SOL, F-92005 Nanterre (FR)
(72) Inventeur: Evers, Gérardus, F-78121 Crespieres (FR)
(74) Mandataire: Nony, Michel

(57) **Abrégé**

L'invention est relative à un procédé de décontamination d'une zone polluée souterraine.

On circonscrit la zone à décontaminer (5) en réalisant une paroi latérale étanche (6) s'étendant depuis la surface du sol jusqu'à une profondeur supérieure à celle de la zone à décontaminer (5) ; On recouvre la surface du sol au-dessus de la zone à décontaminer par une couverture supérieure étanche à l'air (7), dont la périphérie est réunie de manière étanche à la partie haute de la paroi latérale (6) ; on crée une dépression au-dessous de la couverture supérieure (7), par exemple à l'aide d'une pompe à vide (10) pour créer un courant d'eau ascendant à travers la zone à décontaminer (5); et on évacue vers l'extérieur l'eau ainsi aspirée.

## Description

La présente invention a pour objet un procédé et un dispositif pour le traitement des sols pollués.

On sait que les produits polluants contenus dans le sol peuvent se trouver soit dans des couches de terrain situées au-dessus de la nappe phréatique soit dans la nappe phréatique elle-même.

Celle-ci est alors polluée par des produits en solution, en suspension ou en émulsion qui sont généralement localisés dans sa frange supérieure en raison de leur cheminement depuis la surface du sol et/ou de leur densité qui est souvent inférieure à celle de l'eau.

C'est notamment le cas des polluants organiques comme certains hydrocarbures qui, lorsqu'ils sont déversés sur un terrain perméable, imprègnent d'abord les couches situées au-dessus de la nappe phréatique, puis viennent s'accumuler à la surface de cette dernière.

Pour décontaminer des sols pollués, on connaît déjà une technique consistant à excaver l'ensemble des terres polluées pour les nettoyer en usine ou sur place moyennant l'installation de moyens adéquats.

Cette technique est difficile à mettre en oeuvre car elle nécessite l'utilisation de moyens importants et elle mobilise pendant de longues périodes la surface du sol en cours de décontamination.

On connaît également une technique consistant à pomper l'eau de la nappe phréatique située en dessous de la zone polluée en forant deux réseaux de puits régulièrement répartis sur la zone à traiter, le premier servant à pomper l'eau de la nappe phréatique polluée, le second servant à réalimenter cette nappe en eau dépolluée.

Cependant, cette dernière technique ne convient pas aux sols à faible perméabilité, par exemple inférieure à 10-5 m/s. En outre la décontamination s'effectue surtout autour des puits de pompage, et le terrain n'est pas décontaminé uniformément, du fait qu'il peut subsister entre les puits des endroits fortement contaminés.

En outre, cette technique ne permet pas d'extraire les polluants lorsqu'ils sont fixés dans des couches de terrain situées au-dessus de la nappe phréatique.

La présente invention est relative à un procédé de décontamination d'une zone souterraine polluée, qui permet d'éviter les problèmes rencontrés avec les techniques connues en permettant notamment d'extraire à la fois les polluants de la nappe phréatique et ceux qui sont fixés dans les couches de terrain situées au dessus de la nappe phréatique tout en étant d'une mise en oeuvre simple et économique.

En outre, grâce au procédé selon l'invention, la surface du sol située au-dessus de la zone à traiter reste utilisable pendant toute la durée du traitement de décontamination.

La présente invention a pour objet un procédé de décontamination d'une zone polluée souterraine, caractérisé par le fait que l'on circonscrit la zone à décontaminer en réalisant une paroi latérale étanche s'étendant depuis la surface du sol jusqu'à une profondeur supérieure à celle de la zone à décontaminer ; que l'on recouvre la surface du sol au-dessus de la zone à décontaminer par une couverture supérieure étanche à l'air dont la périphérie est réunie de manière étanche à la partie haute de la paroi latérale ; que l'on crée une dépression au-dessous de la couverture supérieure par exemple à l'aide d'une pompe à vide pour créer un courant d'eau ascendant à travers la zone à décontaminer ; et que l'on évacue vers l'extérieur l'eau ainsi aspirée.

Selon l'invention, la paroi latérale étanche laisse à sa partie inférieure un passage permettant à l'eau de la nappe phréatique de pénétrer à l'intérieur du volume délimité par ladite paroi pour traverser la zone polluée à décontaminer.

On comprend que le procédé selon l'invention permet de réaliser une décontamination très homogène du terrain puisque la dépression créée est régulièrement répartie à la surface du sol, ce qui évite d'avoir des répartitions hétérogènes lors de la circulation dans le sol de l'eau qui entraîne les produits polluants vers la surface.

En outre, grâce au procédé selon l'invention, on peut traiter des terrains ayant une perméabilité relativement faible, c'est-à-dire jusqu'à environ 10-7 m/s.

Dans un mode de mise en oeuvre préféré de l'invention, on récupère l'eau qui est remontée à la surface du sol et on la décontamine pour la réinjecter dans la nappe phréatique au voisinage de ou dans la zone à décontaminer.

Selon un mode de mise en oeuvre préféré de l'invention, pour réaliser la couverture supérieure étanche à l'air, on utilise une membrane étanche à l'air telle qu'un film en matière plastique qui est directement posé sur le sol préalablement préparé.

Dans un mode de mise en oeuvre particulier de l'invention, la dépression est créée sous toute la surface de la couverture supérieure à l'aide d'un réseau de drains régulièrement répartis et reliés à une pompe à vide par un collecteur.

Avantageusement, les drains sont disposés de préférence sensiblement horizontalement dans l'épaisseur d'une couche drainante de forte perméabilité telle que du sable qui est répandu à la surface du sol, en-dessous de la couverture supérieure.

Cette couche drainante est destinée à la fois à protéger les drains mis en dépression et à permettre de répartir la dépression créée dans les drains par la pompe à vide de manière homogène sur toute la surface du sol.

Dans un mode de mise en oeuvre préféré de l'invention, on recouvre la couche drainante avec une couche d'argile qui participe à l'étanchéification de la couverture supérieure et qui réalise une surface apte à bien supporter une membrane étanche en matière plastique, lorsque la couverture supérieure est réalisée à l'aide de cette dernière.

Selon l'invention, on protège avantageusement la membrane en matière plastique en la recouvrant d'une couche de terre protectrice, ce qui permet d'utiliser la surface du sol, pendant la durée de mise en oeuvre du procédé de décontamination.

La présente invention a également pour objet un dispositif pour la mise en oeuvre du procédé décrit ci-dessus, caractérisé par le fait qu'il comporte en combinaison une paroi latérale étanche s'étendant depuis la surface du sol jusqu'à une profondeur supérieure à celle de la zone à décontaminer ; une couverture supérieure étanche à l'air, réunie de manière étanche à la partie haute de la paroi latérale ; et des moyens tels qu'une pompe à vide pour créer une dépression au-dessous de la couverture supérieure.

Dans un mode de réalisation préféré de l'invention, la couverture supérieure étanche est constituée par une membrane telle qu'un film en matière plastique qui est directement posé sur le sol préalablement préparé.

Dans un mode de réalisation particulier de l'invention, le dispositif comporte un réseau de drains régulièrement répartis et reliés à une pompe à vide par un collecteur.

Le dispositif selon ce mode de réalisation permet d'obtenir une bonne homogénéité de la dépression créée sous la couverture supérieure.

Avantageusement, le dispositif comporte également une couche drainante constituée par exemple de sable et dans l'épaisseur de laquelle sont logés les drains.

Dans le but de mieux faire comprendre l'invention on va en décrire maintenant un mode de mise en oeuvre donné à titre d'exemple, et sans aucun caractère limitatif en référence au dessin annexé dans lequel :
- la figure 1 représente une vue en coupe verticale d'un terrain en cours de décontamination par mise en oeuvre du procédé selon l'invention, et
- la figure 2 représente une vue en coupe du dispositif d'aspiration et de la partie supérieure de la zone à décontaminer.

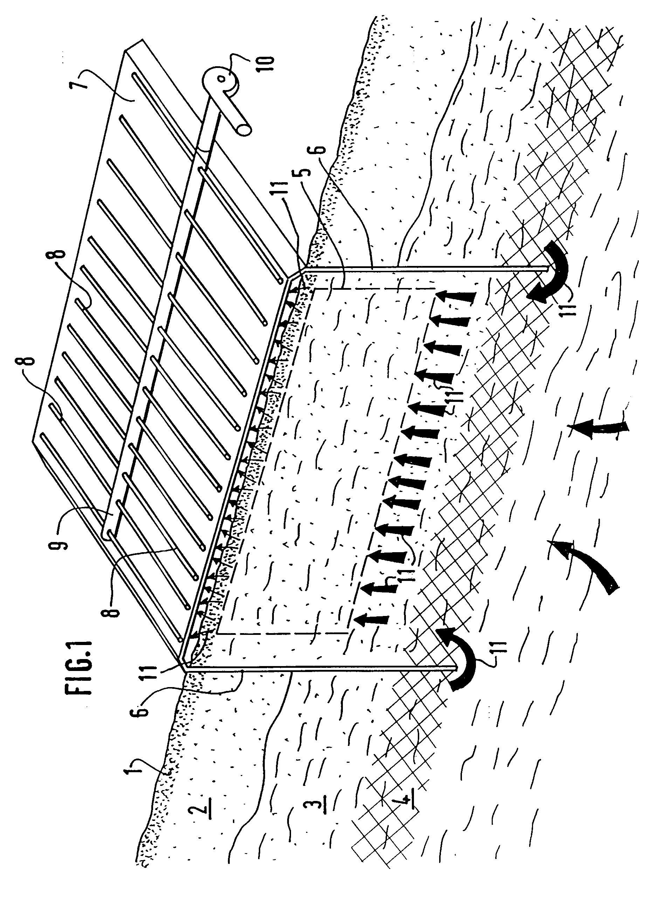

Le terrain de ce mode de mise en oeuvre représenté sur la figure 1 est constitué par une première couche superficielle perméable 1, une deuxième couche également perméable 2 dans laquelle se situe le niveau de la nappe phréatique 3, et une couche moins perméable 4 qui peut être par exemple une couche d'argile, mais qui laisse néanmoins l'eau de la nappe phréatique la traverser.

Le terrain représenté renferme une zone à décontaminer 5, schématiquement délimitée sur le dessin par un rectangle représenté en traits interrompus.

Selon l'invention, on a réalisé par un procédé connu une paroi latérale étanche 6 tout autour de la zone à décontaminer.

La paroi 6 est réalisée jusqu'à une profondeur supérieure à celle de la zone à décontaminer 5.

Selon l'invention, il est important que l'extrémité inférieure de la paroi 6 ne se situe pas dans une couche de terrain totalement imperméable car dans un tel cas, l'eau de la nappe phréatique 3 ne pourrait pas pénétrer dans le volume de terrain délimité par la paroi 6 pour lessiver la zone à décontaminer 5.

La surface du sol délimité par la paroi 6 est recouverte par une couverture supérieure étanche constituée dans le mode de réalisation décrit par une membrane se présentant sous la forme d'un film en matière plastique 7.

Le dispositif d'aspiration de ce mode de réalisation comporte un réseau de drains 8, reliés chacun à un collecteur 9 qui débouche dans une pompe à vide 10 placée à l'extérieur de l'enceinte constituée par les parois 6 et 7.

La répartition des drains 8 permet d'obtenir une dépression régulière sous la couverture supérieure 7. Cette dépression crée un courant d'eau ascendant dans le sol, ce qui a pour effet de soulever la nappe phréatique 3 dans l'enceinte et de permettre son aspiration par les drains 8.

Les flèches 11 matérialisent le passage d'un courant d'eau ainsi créé qui traverse la zone à décontaminer 5, et est extrait par les drains 8.

L'eau pénètre dans le volume de terrain délimité par la paroi 6 grâce au fait que cette paroi 6 ménage, à sa partie inférieure, un passage pour l'eau de la nappe phréatique.

On comprend qu'en traversant la zone 5, l'eau entraîne les éléments polluants solubles ainsi que les produits en suspension de faible granulométrie qui sont aptes à traverser les couches perméables 1 et 2.

Dans le cas présent, l'eau récupérée par les drains 8, est envoyée dans une usine de décontamination, après quoi, elle peut être réinjectée dans la nappe phréatique 3 au voisinage de la zone de décontamination.

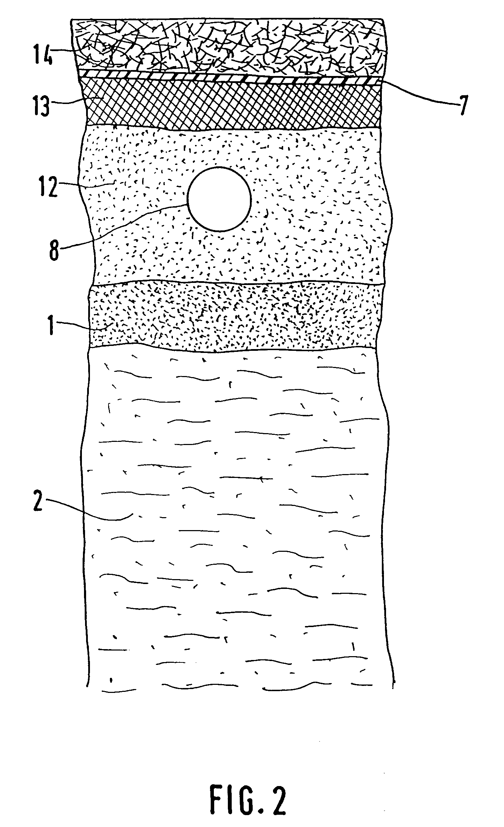

Sur la figure 2, on a représenté une vue en coupe à plus grande échelle du dispositif d'aspiration et de la partie supérieure du terrain.

Sur la couche de terrain naturel 1, on a placé une couche de sable 12 d'une épaisseur suffisante pour pouvoir contenir les drains 8.

Cette couche de sable remplit le double rôle de protéger les drains 8 et de filtrer l'eau remontante pour éviter l'obturation des orifices des drains 8.

Au-dessus de la couche de sable 12, on a placé une couche d'argile 13 qui constitue à la fois une première barrière d'étanchéité et un support adapté pour recevoir une membrane en matière plastique 7.

Enfin, dans le mode de réalisation décrit, on a recouvert la membrane 7 d'une couche protectrice 14 qui permet de protéger cette dernière tout en permettant d'utiliser provisoirement la surface du sol en cours de dépollution par exemple comme parking.

On comprend que le procédé selon l'invention est particulièrement simple et économique à mettre en oeuvre, dans la mesure où il ne nécessite pas le déplacement de volumes importants de terre et/ou d'eau, mais réalise le nettoyage in situ des terrains contaminés.

En outre, une fois le dispositif d'aspiration mis en place, la surface du sol située au-dessus de la zone à décontaminer est rendue disponible pendant toute la durée du traitement de décontamination.

Il est bien entendu que le mode de mise en oeuvre qui vient d'être décrit ne présente aucun caractère limitatif et qu'il pourra recevoir toutes modifications désirables sans sortir pour cela du cadre de l'invention.

En particulier, il est clair que le dispositif d'aspiration décrit ici n'est aucunement limitatif de la portée de l'invention et qu'un réseau de drains disposés différemment ou encore tout autre dispositif permettant de créer une dépression en-dessous de la couverture supérieure étanche du dispositif pourraient être utilisés.

Enfin, il est clair que la couverture supérieure peut être réalisée par des moyens autres que des membranes étanches, comme par exemple une couche d'argile compacte d'épaisseur suffisante.

## Revendications

1. Procédé de décontamination d'une zone polluée souterraine, caractérisé par le fait que l'on circonscrit la zone à décontaminer (5) en réalisant une paroi latérale étanche (6) s'étendant depuis la surface du sol jusqu'à une profondeur supérieure à celle de la zone à décontaminer (5) ; que l'on recouvre la surface du sol au-dessus de la zone à décontaminer par une couverture supérieure étanche à l'air (7), dont la périphérie est réunie de manière étanche à la partie haute de la paroi latérale (6) ; que l'on crée une dépression au-dessous de la couverture supérieure (7), par exemple à l'aide d'une pompe à vide (10) pour créer un courant d'eau ascendant à travers la zone à décontaminer (5); et que l'on évacue vers l'extérieur l'eau ainsi aspirée.

2. Procédé selon la revendication 1, caractérisé par le fait que l'on récupère l'eau qui est remontée à la surface du sol et qu'on la décontamine avant de la réinjecter dans la nappe phréatique (3) au voisinage de, ou dans la zone à décontaminer (5).

3. Procédé selon l'une quelconque des revendications 1 et 2, caractérisé par le fait que l'on utilise comme couverture supérieure une membrane en matière plastique (7).

4. Procédé selon l'une quelconque des revendications 1 à 3, caractérisé par le fait que l'on crée la dépression sous toute la surface de la couverture supérieure (7) à l'aide d'un réseau de drains (8) régulièrement répartis sous cette couverture supérieure (7) et reliés à une pompe à vide (10) par un collecteur (9).

5. Dispositif pour la mise en oeuvre du procédé selon l'une quelconque des revendications 1 à 4, caractérisé par le fait qu'il comporte en combinaison : une paroi latérale étanche (6) s'étendant depuis la surface du sol jusqu'à une profondeur supérieure à celle de la zone à décontaminer (5) ; une couverture supérieure étanche (7) au-dessus de la zone à décontaminer (5) réunie de manière étanche à la partie haute de la paroi latérale (6) ; et des moyens (8,9,10) pour créer une dépression au-dessous de la couverture supérieure (7) et évacuer de l'eau vers l'extérieur.

6. Dispositif selon la revendication 5, caractérisé par le fait que la couverture supérieure étanche est constituée par un film (7) en matière plastique qui est directement posé sur le sol préalablement préparé.

7. Dispositif selon l'une quelconque des revendications 5 à 6, caractérisé par le fait qu'il comporte un réseau de drains régulièrement répartis sous la couverture supérieure étanche (7) et reliés à une pompe à vide (10) par un collecteur (9).

8. Dispositif selon la revendication 7, caractérisé par le fait qu'il comporte une couche drainante (12) telle que du sable, dans l'épaisseur de laquelle sont logés les drains (8) de préférence disposés sensiblement horizontalement.

9. Dispositif selon l'une quelconque des revendications 6 à 8, caractérisé par le fait qu'il comporte une couche d'argile (13) pour supporter le film (7) en matière plastique.

10. Dispositif selon l'une quelconque des revendications 6 à 9, caractérisé par le fait qu'il comporte une couche protectrice (14) au-dessus du film (7) en matière plastique.
